# FASCICULE DE BREVET EUROPEEN

(11) **EP 2 936 885 B1**
(45) Date de publication et mention de la délivrance du brevet: **22.03.2017**
(21) Numéro de dépôt: 13818334.8
(22) Date de dépôt: 18.12.2013
(51) Int. Cl.: H04W 52/02

(54) **PROCÉDÉ DE REVEIL D'UNE STATION DE BASE DESSERVANT UNE PETITE CELLULE LORS D'UN APPEL ENTRANT**
VERFAHREN ZUM AUFWECKEN EINER EINE KLEINE ZELLE VERSORGENDEN BASISSTATION BEI EINEM EINGEHENDEN ANRUF
METHOD FOR WAKING UP A BASE STATION SERVING A SMALL CELL WHEN AN INCOMING CALL ARRIVES

(30) Priorité: 21.12.2012 FR 1262688
(43) Date de publication de la demande: 28.10.2015
(73) Titulaire: Orange, 75015 Paris (FR)
(72) Inventeur: EL AYOUBI, Salah Eddine, F-94270 Le Kremlin-Bicêtre (FR)
(86) Numéro de dépôt international: PCT/FR2013/053150
(87) Numéro de publication internationale: WO 2014/096692

(56) Documents cités:
- SOUMYA DAS ET AL: "Active Call Macro-Femtocell Hand-in Enhancement", 3GPP2 DRAFT; A20-20100719-001R0 ACTIVE CALL MACRO-FEMTOCELL HAND-IN ENHANCEMENT, 3RD GENERATION PARTNERSHIP PROJECT 2, 3GPP2, 2500 WILSON BOULEVARD, SUITE 300, ARLINGTON, VIRGINIA 22201 ; USA , vol. TSGA 20 juillet 2010 (2010-07-20), pages 1-13, XP062113330, Extrait de l'Internet: URL:http://ftp.3gpp2.org/TSGA/Working/2010 /07xx-calls/0719-TSG-A.2/ [extrait le 2010-07-20]
- SOUMYA DAS ET AL: "A25 Active Call (Macro to Femtocell) Hand-in Enhancement", 3GPP2 DRAFT; A20-20101025-007R2 QC A25 ACTIVE CALL MACRO-FEMTO HO ENH, 3RD GENERATION PARTNERSHIP PROJECT 2, 3GPP2, 2500 WILSON BOULEVARD, SUITE 300, ARLINGTON, VIRGINIA 22201 ; USA , vol. TSGA 2 novembre 2010 (2010-11-02), pages 1-10, XP062113676, Extrait de l'Internet: URL:http://ftp.3gpp2.org/TSGA/Working/Stan dards/A.S0024-A-(Femto)-TIA-1167-A/A.S0024 -A-v1.0-TIA-1167-A/2009-1102-A.S0024-A-v1. 0-accepted/ [extrait le 2010-11-02]
- ASHRAF I ET AL: "Power savings in small cell deployments via sleep mode techniques", 2010 IEEE 21ST INTERNATIONAL SYMPOSIUM ON PERSONAL, INDOOR AND MOBILE RADIO COMMUNICATIONS WORKSHOPS (PIMRC WORKSHOPS); 26-30 SEPT. 2010; INSTANBUL, TURKEY, IEEE, PISCATAWAY, NJ, USA, 26 septembre 2010 (2010-09-26), pages 307-311, XP031837067, ISBN: 978-1-4244-9117-9

## Description

L'invention se rapporte au domaine des télécommunications. Elle concerne en particulier les stations de base (appelées « petites stations », dans le cadre de la présente invention) qui desservent une cellule de « petite » taille et traitent une partie du trafic de communications de manière à pouvoir décharger une station radio desservant une cellule de « grande » taille (cellule dite « macro ») en cas de trafic élevé, de façon à réduire la congestion du trafic de communications dans cette cellule macro. Encore plus particulièrement, l'invention concerne la réduction de la consommation énergétique de ces « petites stations ».

Pour augmenter la capacité de leurs réseaux mobiles cellulaires et décharger les stations de base macro, les opérateurs utilisent des cellules de taille relativement faible ou très faible, en plus des cellules « macro » de taille classique. On appelle généralement « microcellule » une cellule couvrant une zone dont le rayon est inférieur à 500 m, « picocellule » une cellule couvrant une zone de l'ordre de 200 x 200 *m*², et « femtocellule » une cellule couvrant une zone de l'ordre de 10 x 10 *m*². La zone de couverture de chaque station peut être limitée en contrôlant sa puissance.

Les opérateurs envisagent donc de déployer des réseaux dits « hétérogènes », qui comprennent à la fois des cellules macro et des petites cellules gérées par le même opérateur. Au moment de leur arrivée dans le réseau, les terminaux mobiles s'attachent généralement à la station de base dont le signal pilote reçu est le plus fort ; ils s'attacheront donc à une petite cellule locale plutôt qu'au réseau macro si la puissance pilote reçue de la station locale est supérieure à celle reçue de la station macro. De tels réseaux hétérogènes permettraient à une petite station de décharger une station macro avoisinante en absorbant une partie du trafic de cette station macro.

Il est aussi envisageable de constituer un réseau à l'aide de petites cellules uniquement (sans cellules macros), mais un tel réseau ne pourra pas assurer facilement une couverture complète du territoire concerné.

La souplesse en termes de taille cellulaire est une caractéristique de la technologie mobile 2G et des technologies suivantes, et représente un facteur significatif de l'accroissement de capacité des réseaux. Les contrôles de puissance mis en oeuvre dans les réseaux mobiles font qu'il est plus facile de réduire les interférences entre cellules voisines utilisant les mêmes fréquences. En subdivisant des cellules et en créant plus de cellules (on parle de densification du réseau) pour pouvoir desservir des zones à haute densité, un opérateur de réseau cellulaire peut optimiser l'utilisation du spectre et faire en sorte que la capacité puisse augmenter.

On peut ainsi, au moyen d'une station de base de puissance relativement faible, couvrir une zone limitée. Cela permet d'augmenter la capacité d'un réseau dans des zones d'accès difficile ou coûteux dans l'approche « macro-cellulaire » classique.

Plus précisément, une « microcellule » peut couvrir une zone comme un centre commercial, un hôtel, ou un centre de transport. Les microcellules sont souvent déployées temporairement pendant des événements sportifs et d'autres occasions dans lesquelles on sait à l'avance que l'on aura besoin d'une capacité supplémentaire à un emplacement spécifique.

Une « picocellule » couvre généralement une zone de petite taille, par exemple à l'intérieur d'un bâtiment (bureaux, centres commerciaux), ou, plus récemment, à l'intérieur d'un avion. Les picocellules sont généralement utilisées pour étendre la couverture aux zones intérieures, c'est-à-dire là où les signaux extérieurs ne pénètrent pas bien, ou pour augmenter la capacité de réseau dans des zones à haute densité d'utilisation du téléphone, comme dans les gares de train. Une station de base de picocellule est généralement une unité à bas prix, de petite taille, et relativement simple. On trouve des picocellules utilisant la plupart des technologies cellulaires telles que le GSM/GPRS, l'UMTS et le LTE.

Dans les réseaux GSM/GPRS, en particulier, chaque station de base de picocellule est connectée à un BSC (initiales des mots anglais *« Base Station Controller* » signifiant « Contrôleur de Stations de Base »). En fait, de nombreuses picocellules sont connectées à chaque BSC ; le BSC assure la gestion des ressources radio et des fonctions de *« handover*» (migration d'un terminal mobile d'une cellule à une cellule voisine), et agrège des données aux fins de transmission vers le Centre de Commutation Mobile (en anglais, « *Mobile Switching Center* », ou MSC) et/ou le Noeud de Support de Passerelle GPRS (en anglais, *« Gateway GPRS Support Node* », ou GGSN). La connectivité entre les unités de picocellule et le BSC est généralement réalisée au moyen d'un câblage intérieur à un bâtiment ; les systèmes les plus récents utilisent un câblage Ethernet ; les avions utilisent des liaisons par satellite.

Quant aux réseaux UMTS, ils peuvent comprendre des réseaux privés (par exemple des réseaux domestiques) constitués de cellules de faible taille appelées « femto NodeB », dans lesquelles les stations de base, appelées « *Home NodeB* » (HNB), combinent chacune les fonctions de NodeB et de RNC (initiales des mots anglais « *Radio Network Controller* » signifiant «Contrôleur des Ressources Radio »). Chaque HNB est relié à une passerelle (« *HNB Gateway* ») située à l'extérieur du réseau privé dans le réseau d'accès radio de l'opérateur ; la HNB Gateway gère le HNB et le trafic des abonnés, et sert d'intermédiaire avec le réseau coeur. On notera que les réseaux GSM comprennent eux aussi des passerelles HNB Gateway dotées de fonctionnalités analogues.

L'invention s'applique aux architectures décrites succinctement ci-dessus, et en particulier aux architectures « femto 3G » telles que définies dans le document TR 25.820 V8.2.0 (2008-09) du 3GPP, ainsi qu'aux futures architectures « femto LTE ». Ces architectures utilisent des « cellules femto » dans lesquelles on peut déployer un réseau mobile domestique à faible coût en utilisant l'infrastructure haut-débit déjà présente chez l'abonné. Ce contexte est du plus haut intérêt pour les opérateurs : en effet, on prévoit qu'une proportion significative d'abonnés des futures offres téléphoniques possédera une cellule femto.

On appelle « transfert actif » (« *active hand-in* » en anglais) la capacité de transférer une connexion Voix ou Data depuis une cellule macro vers une cellule femto donnée. Une difficulté rencontrée dans le transfert actif est que, dans une région géographique donnée, un nombre important de cellules femto partagent un nombre limité de décalages PN (« *Pseudo*-*Noise Offsets* » en anglais), et que par conséquent on ne peut identifier une cellule femto donnée uniquement sur la base de son décalage PN. La proposition soumise par Soumya Das et al. à l'organisme de normalisation 3GPP2 le 19 juillet 2010 et intitulée « Active Call Macro-Femtocell Hand-in Enhancement » divulgue un procédé de transfert actif permettant d'identifier une cellule femto donnée à l'aide d'identifiants de liens radio hors-bande (« *Out-of-Band* » en anglais).

Cependant, les petites stations augmentent la consommation énergétique du réseau d'accès car elles sont tout le temps actives afin d'assurer leurs services. Il a donc été proposé de mettre en veille une petite station lorsqu'elle n'a pas servi de communication pendant une certaine durée, afin de réduire sa consommation.

Le principal problème causé par une telle disposition est celui de réveiller cette petite station lorsqu'elle est en veille et qu'une demande de communication lui est adressée. C'est par exemple le cas lorsque le coeur du réseau cellulaire essaie de transmettre un appel destiné à un terminal apte à se connecter à une certaine petite station, mais qu'il n'existe pas de couverture macro dans la zone où se trouve cette petite station (i.e., dans le cas d'un réseau homogène, ou même dans le cas d'un réseau hétérogène du fait de circonstances locales) : en effet, dans une telle situation, le coeur de réseau est incapable de localiser ce terminal sur la base de la technologie radio sous-jacente, et donc de savoir vers quelle station de base (petite ou macro) il doit diriger l'appel ; on pourrait, pour remédier à ce problème, envisager d'équiper le terminal d'un outil de localisation quelconque (par exemple selon la technologie GPS), mais les méthodes de localisation connues sont généralement peu fiables à l'intérieur de bâtiments.

On connaît, sur la base de l'article de H. Claussen, I. Ashraf, et L.T.W. Ho. intitulé « Dynamic idle mode procedures for femtocells » (IEEE WCNC, Sydney, avril 2010) un procédé de réveil d'une station femto utilisant un lien additionnel constitué d'un signal radio de basse puissance : par exemple, un utilisateur pourrait, au moyen de ce signal radio, réveiller une station femto en veille lorsqu'il est prêt à recevoir des communications provenant du coeur de réseau. Ce procédé a évidemment pour inconvénient que la station femto est activée même si aucune communication n'arrive ensuite pendant la durée précédant une nouvelle mise en veille. De plus, il requiert l'ajout d'un récepteur radio dédié dans les stations femto destinées à mettre en oeuvre le procédé, et aussi l'ajout d'un émetteur radio dédié dans tous les terminaux destinés à mettre en oeuvre le procédé.

La présente invention concerne donc un procédé de réveil d'une station de base d'un réseau cellulaire, comprenant les étapes suivantes :
- ladite station de base est partiellement mise en veille, et
- un point d'accès d'un réseau sans-fil local détecte la présence d'un terminal dans sa zone de couverture, et identifie ledit terminal.
Ledit procédé est remarquable en ce qu'il comprend en outre les étapes suivantes :
- ledit point d'accès émet un message signalant la présence du terminal, ledit message contenant un identifiant du terminal,
- la station de base reçoit ledit message,
- la station de base transmet audit réseau cellulaire l'information selon laquelle ledit terminal est situé dans sa zone de couverture, et
- la station de base se réveille lorsqu'elle reçoit du réseau cellulaire une communication à destination du terminal.

On notera que, dans le cadre de la présente invention, on désigne par « terminal » tout objet portatif apte à participer à des communications sans-fil. Ce terminal pourra, par exemple, être un téléphone mobile, ou un ordinateur portable ou encore une tablette numérique.

Ainsi, l'invention permet de réveiller une station de base d'un réseau cellulaire, lorsqu'une communication entrante est destinée à un terminal possédant une première interface de connexion avec ledit réseau cellulaire, et une deuxième interface avec un réseau sans-fil local.

Grâce à ces dispositions, on peut réduire la consommation des stations de base, car elles ne sont réveillées que lorsque des communications entrantes sont effectivement reçues.

On notera que la présente invention fonctionne, avantageusement, avec des terminaux classiques, contrairement au procédé selon l'article de H. Claussen *et al.* décrit succinctement ci-dessus.

L'invention ne préjuge pas des moyens pouvant être utilisés pour les communications *sortantes.* On peut prévoir, par exemple, que l'utilisateur du terminal réveille manuellement la station de base lorsqu'il veut placer un appel par son entremise. Dans le cas où ledit réseau cellulaire est un réseau hétérogène, on peut prévoir également que les terminaux utilisent le réseau macro pour leurs communications sortantes.

Corrélativement, l'invention concerne une station de base d'un réseau cellulaire, comprenant des premiers moyens pour se mettre partiellement en veille lorsqu'elle a été inactive pendant une certaine période. Ladite station de base est remarquable en ce qu'elle comprend en outre des seconds moyens qui ne se mettent pas en veille avec le reste de la station de base, lesdits seconds moyens comprenant :
- un agent de localisation apte à recevoir un message signalant la présence d'un terminal, ledit message contenant un identifiant du terminal, et à transmettre audit réseau cellulaire l'information selon laquelle ledit terminal est situé dans sa zone de couverture, et
- un agent de réveil apte à réveiller la station de base lorsqu'elle reçoit du réseau cellulaire une communication à destination du terminal.

L'invention concerne également un système de télécommunications comprenant :
- au moins une station de base telle que décrite succinctement ci-dessus, et
- au moins un point d'accès d'un réseau sans-fil local, ledit point d'accès comprenant des moyens pour
   - détecter la présence d'un terminal d'utilisateur dans la zone de couverture du point d'accès et pour identifier ledit terminal, et
   - émettre un message signalant la présence du terminal, ledit message contenant un identifiant du terminal.

Les avantages offerts par cette station de base et ce système de télécommunications sont essentiellement les mêmes que ceux offerts par lesdits procédés.

On notera que ladite station de base et ledit point d'accès peuvent être regroupés dans un seul équipement, ou constituer des équipements distincts, ou peuvent même être regroupés en réseau (réseau de plusieurs stations de base et/ou réseau de plusieurs points d'accès).

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour exécuter les étapes d'un procédé de réveil d'une station de base tel que succinctement décrite ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs.

On notera pour commencer que la présente invention est compatible avec toutes les technologies d'accès radio connues (TDMA, CDMA, W-CDMA, OFDMA, et ainsi de suite). Elle s'applique notamment aux réseaux cellulaires utilisant la technologie GSM/GPRS, telle que définie dans la version 97 et les versions ultérieures de la norme GSM, ou la technologie UMTS (« *Universal Mobile Telecommunications System »),* telle que définie notamment dans les normes 23.002, 23.003 et 29.060 du projet 3GPP (« *Third-Generation Partnership Project* »), ou encore la norme LTE (« *Long Term Evolution »).*

On rappelle que, alors que le GSM utilise un support de transmission de données par commutation en mode circuit (« *circuit-switched* » en anglais), le GPRS y ajoute un nouveau support de transmission de données par commutation en mode paquets (« *packet-switched* » en anglais), qui permet de fournir à une station mobile une connectivité IP (« *Internet Protocol* ») disponible en permanence, mais dans laquelle les ressources radio sont allouées uniquement quand des données doivent être transférées. Les abonnés d'un opérateur mobile peuvent ainsi accéder à des services utilisant le protocole IP, tels que la messagerie électronique, le téléchargement de fichiers, la consultation de sites Web ou WAP.

L'UMTS utilise la commutation en mode circuit et la commutation en mode paquets. L'UMTS utilise la technologie W-CDMA, normalisée par le 3GPP, et constitue la mise en oeuvre européenne des spécifications IMT-2000 de l'UIT (« Union Internationale des Communications ») pour les systèmes radio cellulaires 3G. L'UMTS permet d'échanger des données contenues dans des paquets IP avec des serveurs appartenant à un réseau extérieur au réseau UMTS, tel que le réseau Internet.

La norme LTE fait partie de la norme UMTS, mais y incorpore de nombreuses modifications et améliorations, notamment l'utilisation de la modulation OFDM pour la liaison descendante et de SC-FDMA pour la liaison montante (au lieu de W-CDMA pour l'UMTS). Le LTE nécessite une couverture radio dédiée, distincte de la couverture UMTS.

Le système de communications selon invention est placé dans une zone couverte, d'une part, par une ou plusieurs stations de base (notées HBS pour « *Home Base Station* ») d'un réseau cellulaire, gérant chacune, par exemple, une cellule de type femto 3G, et d'autre part un ou plusieurs points d'accès (notés AP pour « *Access Point* » dans ce qui suit) d'un réseau sans-fil local, par exemple un réseau radio de type WiFi, ou ZigBee, ou encore un réseau infrarouge. Plusieurs terminaux (téléphones mobiles, tablettes, ordinateurs, et ainsi de suite) utilisent le réseau local, et certains d'entre eux peuvent en outre utiliser le réseau femto 3G.

On va décrire à présent, selon un mode de réalisation de l'invention, un procédé de réveil d'une station de base mettant en jeu un terminal d'utilisateur possédant à la fois une interface WiFi et une interface 3G.

Lors d'une étape E0, la HBS est, de manière connue, partiellement mise en veille lorsqu'elle n'a eu à gérer aucune communication 3G pendant une durée prédéterminée.

Lors d'une étape E1, lorsqu'un terminal dont l'interface WiFi est active entre dans la zone de couverture de l'AP, il est, de manière classique, automatiquement détecté et identifié par l'AP.

Lors d'une étape E2, un agent émetteur Z contenu dans l'AP émet vers la HBS un message signalant la présence du terminal et contenant un identifiant de ce terminal. Ce message pourra être transmis d'une manière quelconque, selon les préférences de l'Homme du Métier. Ainsi, ce message pourra être véhiculé entre l'AP et la HBS par une liaison sans-fil (infrarouge, Bluetooth, et ainsi de suite), mais il sera de préférence véhiculé par une liaison filaire, plus économe en énergie. Par ailleurs, il pourra obéir à un format spécifique à l'interface entre l'AP et la HBS, ou à un format classique comme le XML (« *Extensible Markup Language* »).

Lors d'une étape E3, un agent récepteur K associé à cette HBS, qui n'est pas mis en veille lorsque la HBS est mise en veille, reçoit ce message, et le transmet à un agent de localisation L de cette HBS, qui n'est, lui non plus, pas mis en veille lorsque la HBS est mise en veille.

Lors d'une étape E4, ledit agent de localisation L informe le réseau cellulaire, *via* le lien direct (« *backhaul link* » en anglais) de la HBS avec le coeur de réseau mobile ou le réseau fixe, de la présence de ce terminal dans la zone de couverture de cette HBS. Le réseau de l'opérateur localise alors ce terminal comme étant associé à cette HBS, et configure le réseau de manière à diriger les appels destinés à ce terminal vers cette HBS.

Quand, lors d'une étape E5, un appel entrant arrive à la HBS *(via* son lien *backhaul*), un agent de réveil M de la HBS, qui n'a lui non plus pas été mis en veille lors de l'étape E0, réveille la HBS.

La station de base HBS peut alors, selon les procédures classiques, déclencher une procédure d'attachement avec le terminal, et lui passer l'appel.

Optionnellement, on pourra prévoir en outre que les étapes selon l'invention ne seront mises en oeuvre qu'après vérification par l'AP que le terminal dont la présence est détectée est effectivement apte à se connecter à la HBS. Il se pourrait en effet que certains terminaux pouvant accéder à cet AP ne soient pas autorisés à accéder à la HBS située dans son voisinage : par exemple, dans le cas d'un réseau cellulaire hétérogène, un visiteur pourrait être autorisé à utiliser le réseau sans-fil local mais pas le réseau cellulaire, l'accès aux petites cellules étant soumis aux mêmes règles que pour le réseau macro.

On notera que l'agent récepteur K, l'agent de localisation L et l'agent de réveil M peuvent être réalisés au sein de modules physiquement distincts ; en variante, deux d'entre eux, ou tous les trois, peuvent être réalisés au sein d'un même module.

On notera également que la mise en oeuvre de l'invention au sein d'un point d'accès d'un réseau sans-fil local et d'une station de base d'un réseau cellulaire peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en oeuvre du procédé de réveil d'une station de base selon l'invention.

En effet, l'invention vise aussi un programme d'ordinateur téléchargeable depuis un réseau de communication comprenant des instructions pour l'exécution des étapes d'un procédé de réveil d'une station de base selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans l'exécution du procédé de réveil de station de base selon l'invention.

## Revendications

1. Procédé de réveil d'une station de base d'un réseau cellulaire, comprenant les étapes suivantes :
- ladite station de base (HBS) est partiellement mise en veille (E0), et
- un point d'accès (AP) d'un réseau sans-fil local détecte (E1) la présence d'un terminal dans sa zone de couverture, et identifie ledit terminal,
ledit procédé étant **caractérisé en ce qu'**il comprend en outre les étapes suivantes :
- ledit point d'accès (AP) émet (E2) un message signalant la présence du terminal, ledit message contenant un identifiant du terminal,
- la station de base (HBS) reçoit (E3) ledit message,
- la station de base (HBS) transmet (E4) audit réseau cellulaire l'information selon laquelle ledit terminal est situé dans sa zone de couverture, et
- la station de base (HBS) se réveille (E5) lorsqu'elle reçoit du réseau cellulaire une communication à destination du terminal.

2. Station de base d'un réseau cellulaire, comprenant des premiers moyens pour se mettre partiellement en veille lorsqu'elle a été inactive pendant une certaine période, ladite station de base (HBS) étant **caractérisée en ce qu'**elle comprend en outre des seconds moyens qui ne se mettent pas en veille avec le reste de la station de base (HBS), lesdits seconds moyens comprenant :
- un agent de localisation (L) apte à recevoir un message signalant la présence d'un terminal, ledit message contenant un identifiant du terminal, et à transmettre audit réseau cellulaire l'information selon laquelle ledit terminal est situé dans sa zone de couverture, et
- un agent de réveil (M) apte à réveiller la station de base (HBS) lorsqu'elle reçoit du réseau cellulaire une communication à destination du terminal.

3. Système de télécommunications, comprenant :
- au moins une station de base (HBS) selon la revendication 2, et
- au moins un point d'accès (AP) d'un réseau sans-fil local, ledit point d'accès (AP) comprenant des moyens pour
• détecter la présence d'un terminal d'utilisateur dans la zone de couverture du point d'accès (AP) et pour identifier ledit terminal, et
• émettre un message signalant la présence du terminal, ledit message contenant un identifiant du terminal.

4. Moyen de stockage de données inamovible, ou partiellement ou totalement amovible, comportant des instructions de code de programme informatique pour l'exécution des étapes d'un procédé de réveil d'une station de base selon la revendication 1.

5. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de réveil d'une station de base selon la revendication 1, lorsqu'il est exécuté sur un ordinateur.

## Patentansprüche

1. Verfahren zum Aufwecken einer Basisstation eines zellularen Netzes, umfassend die folgenden Schritte:
- die Basisstation (HBS) wird teilweise auf Standby (E0) geschaltet, und
- ein Zugangspunkt (AP) eines lokalen drahtlosen Netzwerks erfasst (E1) das Vorhandensein eines Endgeräts in seiner Abdeckungszone und identifiziert das Endgerät,
wobei das Verfahren **dadurch gekennzeichnet ist, dass** es ferner die folgenden Schritte umfasst:
- der Zugangspunkt (AP) entsendet (E2) eine Nachricht, die das Vorhandensein des Endgeräts anzeigt, wobei die Nachricht einen Identifikator des Endgeräts enthält,
- die Basisstation (HBS) empfängt (E3) die Nachricht,
- die Basisstation (HBS) überträgt (E4) an das zellulare Netz die Information, nach der sich das Endgerät in seiner Abdeckungszone befindet, und
- die Basisstation (HBS) wacht auf (E5), wenn sie von dem zellularen Netz eine Kommunikation in Richtung des Endgeräts empfängt.

2. Basisstation eines zellularen Netzes, umfassend erste Mittel, um sich teilweise in Standby zu begeben, wenn sie während einer gewissen Periode inaktiv war, wobei die Basisstation (HBS) **dadurch gekennzeichnet ist, dass** sie ferner zweite Mittel umfasst, die sich mit dem Rest der Basisstation (HBS) nicht in Standby begeben, wobei die zweiten Mittel Folgendes umfassen:
- einen Lokalisierungsagenten (L), der geeignet ist, eine Nachricht zu empfangen, die das Vorhandensein eines Endgeräts anzeigt, wobei die Nachricht einen Identifikator des Endgeräts enthält, und an das zellulare Netz die Information zu übertragen, nach der sich das Endgerät in seiner Abdeckungszone befindet, und
- einen Aufweckagenten (M), der geeignet ist, die Basisstation (HBS) aufzuwecken, wenn sie von dem zellularen Netz eine Kommunikation in Richtung des Endgeräts empfängt.

3. Telekommunikationssystem, umfassend:
- mindestens eine Basisstation (HBS) nach Anspruch 2, und
- mindestens einen Zugangspunkt (AP) eines lokalen drahtlosen Netzwerks, wobei der Zugangspunkt (AP) Mittel umfasst, um
* das Vorhandensein eines Benutzerendgeräts in der Abdeckungszone des Zugangspunktes (AP) zu erfassen und das Endgerät zu identifizieren, und
* eine Nachricht zu entsenden, die das Vorhandensein des Endgeräts anzeigt, wobei die Nachricht einen Identifikator des Endgeräts enthält.

4. Nicht abnehmbares oder teilweise oder vollständig abnehmbares Mittel zur Datenspeicherung, umfassend Informatikprogrammcodebefehle für die Ausführung der Schritte eines Verfahrens zum Aufwecken einer Basisstation nach Anspruch 1.

5. Von einem Kommunikationsnetz fernladbares und/oder auf einem von einem Computer lesbaren Träger gespeichertes und/oder von einem Mikroprozessor ausführbares Computerprogramm, **dadurch gekennzeichnet, dass** es Befehle für die Ausführung der Schritte eines Verfahrens zum Aufwecken einer Basisstation nach Anspruch 1 umfasst, wenn es auf einem Computer ausgeführt wird.

## Claims

1. Method of waking up a base station of a cellular network, comprising the following steps:
- said base station (HBS) is placed partially on standby (E0), and
- an access point (AP) of a local wireless network detects (E1) the presence of a terminal in its coverage zone, and identifies said terminal, said method being **characterized in that** it furthermore comprises the following steps:
- said access point (AP) sends (E2) a message signalling the presence of the terminal, said message containing an identifier of the terminal,
- the base station (HBS) receives (E3) said message,
- the base station (HBS) transmits (E4) to said cellular network the information according to which said terminal is situated in its coverage zone, and
- the base station (HBS) wakes up (E5) when it receives a communication from the cellular network destined for the terminal.

2. Base station of a cellular network, comprising first means for placing themselves partially on standby when said station has been inactive for a certain period, said base station (HBS) being **characterized in that** it furthermore comprises second means which do not place themselves on standby with the remainder of the base station (HBS), said second means comprising:
- a location agent (L) able to receive a message signalling the presence of a terminal, said message containing an identifier of the terminal, and to transmit to said cellular network the information according to which said terminal is situated in its coverage zone, and
- a wakeup agent (M) able to wake up the base station (HBS) when it receives a communication from the cellular network destined for the terminal.

3. Telecommunications system, comprising:
- at least one base station (HBS) according to Claim 2, and
- at least one access point (AP) of a local wireless network, said access point (AP) comprising means for
• detecting the presence of a user terminal in the zone of coverage of the access point (AP) and for identifying said terminal, and
• sending a message signalling the presence of the terminal, said message containing an identifier of the terminal.

4. Irremovable, or partially or totally removable means for storing data, comprising computerized program code instructions for the execution of the steps of a method of waking up a base station according to Claim 1.

5. Computer program downloadable from a communication network and/or stored on a medium readable by computer and/or executable by a microprocessor, **characterized in that** it comprises instructions for the execution of the steps of a method of waking up a base station according to Claim 1, when it is executed on a computer.
